Europäisches Patentamt

European Patent Office

Office européen des brevets

(19)

(11) **EP 0 546 138 B1**

(12)

# FASCICULE DE BREVET EUROPEEN

(45) Date de publication et mention
de la délivrance du brevet:
**03.01.1996 Bulletin 1996/01**

(21) Numéro de dépôt: **92913291.8**

(22) Date de dépôt: **24.06.1992**

(51) Int Cl.6: **F16L 9/12**

(86) Numéro de dépôt international:
**PCT/FR92/00577**

(87) Numéro de publication internationale:
**WO 93/01441 (21.01.1993 Gazette 1993/03)**

(54) **PROCEDE DE FABRICATION D'UNE LIGNE A RAIDEUR VARIABLE ET ELEMENT ASSOCIE**

VERFAHREN ZUR HERSTELLUNG EINER LEITUNG MIT VERÄNDERLICHER STEIFHEIT UND
DAMIT VERBUNDENES ELEMENT

METHOD FOR PRODUCING A LINE HAVING VARIABLE STIFFNESS, AND RELATED ELEMENT

(84) Etats contractants désignés:
**BE DE DK ES GB GR IT NL**

(30) Priorité: **01.07.1991 FR 9108210**
**12.11.1991 FR 9113912**

(43) Date de publication de la demande:
**16.06.1993 Bulletin 1993/24**

(73) Titulaires:
• **INSTITUT FRANCAIS DU PETROLE**
**F-92506 Rueil-Malmaison Cédex (FR)**
• **AEROSPATIALE**
**F-75781 Paris Cédex 16 (FR)**

(72) Inventeurs:
• **SPARKS, Charles**
**F-78110 Le-Vésinet (FR)**
• **ODRU, Pierre**
**F-94120 Fontenay-Sous-Bois (FR)**
• **AUBERON, Marcel**
**F-33160 Le-Haillan (FR)**
• **METIVAUD, Guy**
**F-33400 Talence (FR)**

(74) Mandataire: **Coadour, Jean et al**
**F-92506 Rueil Malmaison (FR)**

(56) Documents cités:
EP-A- 0 009 007        FR-A- 2 458 022
FR-A- 2 557 254        FR-A- 2 616 858
FR-A- 2 627 840        FR-A- 2 641 841
FR-A- 2 648 535        FR-A- 2 675 563

## Description

La présente invention concerne un procédé de fabrication d'une ligne à raideur variable localement et un élément à raideur variable permettant de donner à la ligne la raideur variable.

Cette invention peut être notamment appliquée pour la fabrication d'une ligne connectée à un point fixe, l'autre extrémité de cette ligne étant susceptible de déplacement, ce point fixe pouvant être au fond de l'eau.

La présente invention est notamment applicable aux lignes tendues, par exemple aux lignes d'ancrage, aux lignes de transfert de production pétrolière, telles les colonnes montantes, également désignées par le terme anglo-saxon de "Riser".

Les colonnes actuelles de forage et de production sont généralement liées au fond de la mer par une articulation composée d'une rotule ou d'un joint flexible qui admet un mouvement angulaire de l'ordre 10° dans une direction quelconque. L'exception àcette règle est donnée par les plate-formes à lignes tendues, installées sur les gisements de Hutton en Mer du Nord, et de Jolliet dans le Golfe du Mexique, pour lesquelles les colonnes de production sont encastrées directement dans les têtes de puits qui se trouvent regroupées à la verticale de la plate-forme.

Un tel encastrement est avantageux pour plusieurs raisons. Tout d'abord, il évite d'imposer une flexion importante aux tubages de production qui se trouvent à l'intérieur de la colonne. Il réduit par ailleurs les débattements angulaires de celle-ci. Enfin, il est plus compact, moins cher et demande moins d'entretien qu'une rotule.

Dans le cas d'un prolongeur de forage, une telle liaison réduit considérablement l'usure des tiges.

L'inconvénient d'un encastrement est que les moments induits par le déport latéral de la plate-forme ainsi que par l'effet du courant marin peuvent être très importants. Pour réduire les contraintes de flexion, qui autrement dépasseraient la limite admissible dans la colonne, il devient nécessaire de donner à la colonne ou ligne, une raideur variable sur une partie de sa longueur, plus particulièrement au voisinage de l'encastrement. Ceci est réalisé grâce à un élément à raideur variable.

L'élément peut être conçu pour que la courbure provoquée soit sensiblement constante sur toute sa longueur. Ceci demande que la raideur en flexion (EI) évolue d'une façon précise le long de l'élément.

Les données du problème sont les suivantes :

$A_B =$      l'angle en pied de la colonne dans le cas d'une articulation sans raideur,

$(EI)_R =$      la raideur en flexion de la colonne,

$(EI)_O =$      la raideur en flexion de l'extrémité supérieure de l'élément à raideur variable,

$M_O =$      le moment maximal admissible à la jonction entre la colonne et l'élément,

Si $T =$      la force de traction à la jonction, et

$C_O =$      la force de cisaillement à la jonction

et en posant

$K_R = \sqrt{T/(EI)_R}$

$VR = \sqrt{T.(EI)_R}$

$Re =$      le rayon de courbure minimum admissible de l'élément ($=(EI)_O/M_O$)

$L =$      la longueur de l'élément

Pour mieux comprendre ces désignations, on peut se reporter à la figure 7 de la présente demande.

Il peut être démontré que les relations suivantes sont approximativement exactes :

$$C_O = K_R . M_O \tag{1}$$

la longueur (L) nécessaire pour l'élément

$$L \quad = \quad (EI)_O \left[ \frac{\frac{A}{B}}{M_O} - \frac{1}{V_R} \right] \qquad (2)$$

L'angle ($A_e$) dont doit fléchir l'élément est

$$A_e \quad = \quad \left[ \frac{1}{1 + \frac{(EI)_O}{V_R . L}} \right] AB \qquad (3)$$

L'évolution requise de la raideur en flexion (EI) le long de l'élément

$$(EI)_x \quad = \quad (EI)_O \left[ 1 + K_R.x \right] + T \frac{x^2}{2} \qquad (4)$$

Le moment maximal à l'extrémité inférieure de l'élément

$$M_{max} = M_O \left[ 1 + K_R.L \right] + T.Re \quad \frac{A_e^2}{2} \qquad (5)$$

On déduit de l'équation (2) que plus la raideur minimale en flexion $(EI)_O$ de l'élément est faible, plus l'élément peut être court.

L'équation (5) démontre que le moment maximal transmis à la fondation est en rapport direct avec la longueur (L) de l'élément et du rayon de courbure ($R_e$) admis. Il est donc intéressant de rendre cet élément aussi souple que possible.

Dans le cas où la colonne est fabriquée dans un matériau souple comme, par exemple, un matériau composite (fibres de carbone/fibres de verre/résine) et l'élément est constitué d'un matériau raide comme de l'acier par exemple, il est possible que le moment admissible ($M_O$) à la jonction entre eux soit beaucoup plus faible dans la colonne que dans l'élément.

Il y a deux solutions possibles.

L'élément peut être fait plus long que nécessaire pour lui-même. L'alternative est d'introduire un joint de transition de plusieurs mètres de long et de section constante entre la colonne et l'élément à raideur variable.

La solution optimale, pour éviter d'avoir à introduire un joint de transition entre la colonne et l'élément à raideur variable, est que l'extrémité supérieure de l'élément soit au moins aussi souple en flexion que la colonne elle-même.

On procédera de la même façon dans le cas où la colonne est fabriquée dans un matériau raide comme de l'acier, par exemple, et l'élément est constitué d'un matériau souple comme par exemple un matériau composite (fibres de carbone, fibres de verre, résine).

Dans la description qui suit de la présente invention, on entend par matériau composite un matériau comprenant des fibres, telles des fibres de verre, fibres de carbone, fibres d'aramides, enrobées dans une matrice, telle une matrice thermoplastique ou thermodurcissable, par exemple une résine époxy.

Par drapage, on entend la dépose d'un ensemble de fibres enduites de résine en applicant une pression de contact. Les fibres peuvent être préimprégnées par la résine ou enduites de résine après dépose

Le drapage peut être réalisé avec des nappes unidirectionnelles constituées avec des fibres selon une seule direction ou avec des tissus dont les fibres ont en général deux directions faisant un angle de 90°.

La partie courante d'un tube est définie comme étant généralement composée de plusieurs couches constituées de fibres enroulées selon au moins deux angles par rapport à l'axe d'un tube initial.

On connait différents procédés pour fabriquer des tubes dont l'allongement est pratiquement insensible aux variations des conditions opératoires lors de leur utilisation en recherche et exploitation d'hydrocarbures, plus particulièrement, les trois brevets suivants.

Ainsi, le brevet FR-2.557.254 décrit un procédé permettant de réaliser des conduites flexibles dont l'allongement est pratiquement insensible à l'effet de la pression interne.

Par le brevet FR-2.627.840, on connait un procédé de réalisation de tubes en matériaux composites dont la longueur ne varie pratiquement pas sous l'effet des variations de la pression interne.

Le brevet FR-2.648.535 permet l'optimisation des caractéristiques du tube en matériaux composites tels ceux décrits dans les deux brevets précédemment cités.

Mais, ces procédés antérieurs ne permettent pas d'obtenir un tube ou un élément dont la raideur varie.

Par le brevet français FR-2.616.858, on connait un élément dont la raideur en flexion varie pour se rapprocher de celle d'une colonne en matériau composite. Selon ce document antérieur, l'élément ainsi réalisé est constitué de coquilles en métal ou éventuellement en d'autres matériaux, disposées en une ou plusieurs couches autour du tube. Les dimensions de chaque coquille et la répartition des différentes couches des coquilles sont telles que l'évolution de la raideur de l'ensemble tube + coquilles le long de l'élément soit celle requise par un pied de riser à raideur variable, tout en respectant les contraintes limites des différents composants de l'élément.

Les éléments antérieurs ne permettent cependant pas d'avoir des valeurs de raideur en flexion sensiblement égales à celles d'une colonne en matériau composite.

L'enseignement du document EP-0.009.007 consiste à enrouler des fibres autour d'un tube sous un angle a et à stabiliser l'ensemble après bobinage de manière à conférer au tube une tenue à la torsion.

La présente invention concerne un procédé de réalisation d'un ligne de raideur variable, sur au moins une partie de sa longueur, et l'élément permettant d'arriver à ce résultat.

Le procédé de réalisation met en oeuvre des techniques de bobinage telles que celles décrites dans les brevets FR-2.557.254, FR-2.627.840 et FR-2.648.535 et de drapage connues par l'art antérieur.

La demande française FR-2.641.841 décrit un procédé de bobinage en continu de fibres autour d'un mandrin qui permet d'assembler un embout métallique à un tube, mais qui ne permet pas d'obtenir des couches bobinées de longueurs variables.

Le procédé selon l'invention permet de réaliser une ligne dont la raideur varie sur au moins une partie de sa longueur. La ligne comporte au moins un élément de raideur variable, constitué de sous-couches de matériau composite comprenant des fibres. Les directions des fibres dans les sous-couches ont, par exemple, au moins une composante faisant un angle nul ou un angle de faible valeur avec l'axe de la ligne.

Le procédé comporte les étapes suivantes :

a) on enroule sur un tube initial et sur une longueur correspondant à la longueur finale de la ligne une première couche de matériau composite comprenant des fibres de façon hélicoïdale avec un angle égal en valeur absolue à alpha par rapport à l'axe d'un tube initial ;

b) on enroule sur la première couche et sensiblement sur la même longueur une seconde couche de matériau composite comprenant des fibres de façon hélicoïdale avec un angle en valeur absolue égal à bêta par rapport à l'axe du tube ;

c) on dépose sur la seconde couche des fibres sous forme d'une ou plusieurs sous-couches drapées ou on bobine par exemple de façon continue des fibres essentiellement longitudinales de façon à constituer des sous-couches en matériau composite ayant des dimensions longitudinales allant en diminuant avec l'éloignement de la sous-couche par rapport à l'axe du tube initial et constituant ainsi un élément à raideur variable,

d) on enroule sur l'élément à raideur variable et sensiblement sur la longueur de la ligne une ou plusieurs couches du type de la première ou de la seconde couche,

e) on soumet l'ensemble à une étape de réticulation.

Les dimensions longitudinales peuvent aller en diminuant avec l'éloignement de la sous-couche par rapport à l'axe du tube.

Le tube initial peut être une chemise interne assurant l'étanchéité du tube.

Après l'étape e), on pourra déposer un liner ou chemisage externe.

L'étape c), au cours de laquelle on bobine des fibres de façon continue, pourra comporter les étapes suivantes :

g) on positionne une bague, ladite bague portant des picots répartis sur sa périphérie, à chaque extrémité d'une longueur définissant une sous-couche constituant l'élément de raideur variable,

h) on bobine les fibres ou nappes de fibres constituant une sous-couche en faisant retour sur les picots,

i) on ligature par un enroulement circonférentiel chaque extrémité des fibres ou nappes de fibres de façon telle que les protubérances dues aux retours sur les picots se trouvent à l'extérieur de la partie d'épaisseur constante de la sous-couche comprise entre les deux bagues,

j) on supprime les protubérances dues au retour sur les picots,

k) on déplace au moins une des deux bagues d'un pas égal au décalage que l'on veut introduire entre les sous-couches constituant l'élément à raideur variable,

l) on réitère les étapes g) à k) jusqu'à ce que l'on obtienne un nombre de sous-couches correspondant à la raideur variable que l'on souhaite obtenir pour l'élément à raideur variable.

On pourra bobiner les fibres ou nappes de fibres constituant une sous-couche à l'aide d'aiguilles ou de crochets répartis sur la périphérie de deux bagues placées à chaque extrémité d'une longueur correspondant à une sous-couche constituant l'élément à raideur variable.

Une fibre ou nappe de fibres longitudinales pourra faire retour autour de deux picots ayant une trajectoire circonférentielle entre les deux picots qu'elle contourne.

On pourra choisir les angles alpha et bêta de façon à assurer la stabilité de la ligne en pression et en traction.

Les sous-couches drapées en matériau composite pourront être des fibres de carbone.

Les sous-couches bobinées en matériau composite pourront être des fibres de carbone.

On pourra répéter les opérations c) et d) autant de fois qu'il sera nécessaire pour obtenir une valeur de raideur variable de la ligne spécifiée.

On pourra diminuer les dimensions longitudinales des sous-couches de l'étape c) de façon constante.

On pourra diminuer les dimensions longitudinales des sous-couches de l'étape c) de façon variable.

On pourra utiliser au moins deux matériaux composites pour réaliser les couches du type première ou seconde sous-couche.

On pourra décaler lesdites sous-couches entre les différentes sous-couches de matériau composite de renfort de manière constante.

Le décalage axial entre les différentes sous-couches de matériau composite de renfort pourra être à pas variable.

La ligne obtenue pourra être une colonne montante ou un pied de colonne montante.

La ligne pourra être connectée à un point fixe situé au fond de l'eau, l'autre extrémité de cette ligne étant fixée à une plate-forme flottante de surface telle une plate-forme marine.

L'extrémité de la ligne obtenue pourra avoir une forme adaptée à la forme interne d'une pièce métallique assemblée à ladite ligne.

La présente invention sera mieux comprise et ses avantages apparaîtront plus clairement à la description d'exemples particuliers illustrés par les figures ci-jointes parmi lesquelles :

- la figure 1 représente un schéma d'ensemble qui comporte une plate-forme marine, une ligne et un joint de connexion de celle-ci au fond de l'eau,

- la figure 2 représente un élément à raideur variable,

- les figures 3A et 3B représentent une possibilité de réalisation d'une ligne à raideur variable,

- les figures 4A et 4B représentent un deuxième mode de réalisation d'une ligne à raideur variable,

- les figures 5A et 5B représentent respectivement une vue schématique en coupe d'un mode de réalisation de la première sous-couche d'un élément à raideur variable intégré en cours de fabrication et de la fin de réalisation de cet élément,

- la figure 5C montre schématiquement un exemple de dispositif supportant les bagues,

- la figure 6 représente un schéma d'ensemble de la base d'une ligne assemblée à une pièce métallique et sa connection au sol, et

- la figure 7 sert à introduire les grandeurs déjà mentionnées précédemment.

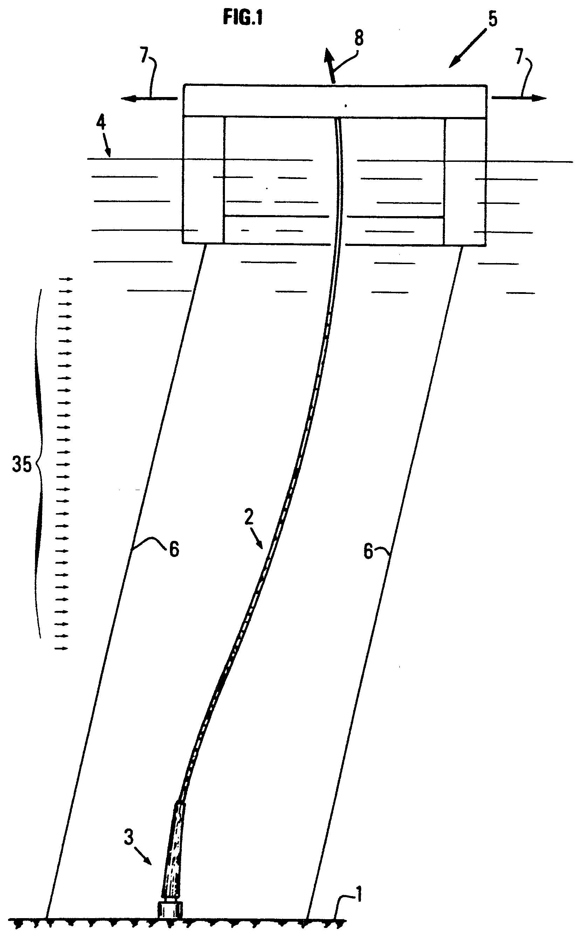

Sur la figure 1, la référence 1 désigne le fond marin auquel doit être fixée la ligne 2 par l'intermédiaire de l'élément de connexion 3 ou partie de la ligne à raideur variable selon la présente invention.

La référence 4 désigne la surface de l'eau sur laquelle flotte une plateforme 5, par exemple à lignes tendues 6. La colonne est soumise à un effort de traction symbolisé par la flèche 8 pouvant être exercée à partir de la plateforme 5.

Cette plateforme ainsi que la colonne sont soumises du fait, notamment, du vent et des courants 35 à des déplacements symbolisés par les flèches 7. Ces déplacements imposent une déformation de la ligne 2 du type illustré à la figure 1.

Afin que ces déplacements n'entraînent pas une rupture rapide du pied de la ligne à l'endroit où celle-ci est encastrée au sol, la présente invention propose un connecteur 3 à raideur variable de faible encombrement.

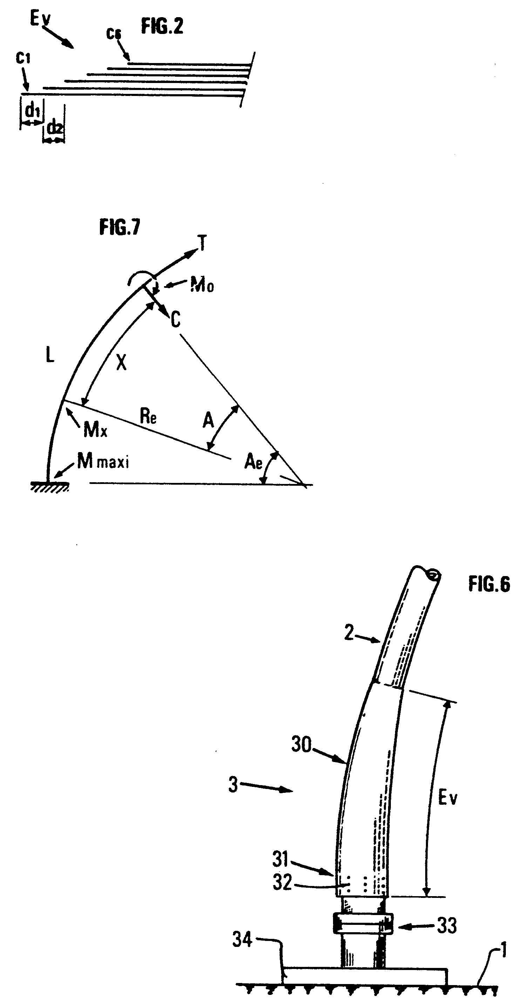

La figure 2 représente un élément de raideur variable Ev composé de six sous-couches de carbone C1, ...C6 bobinées, les décalages d1, ...d5 introduits entre les différentes sous-couches étant égaux. On ne sortira pas du cadre de la présente invention si les valeurs dl ...d5 ont des valeurs différentes ou décalage variable.

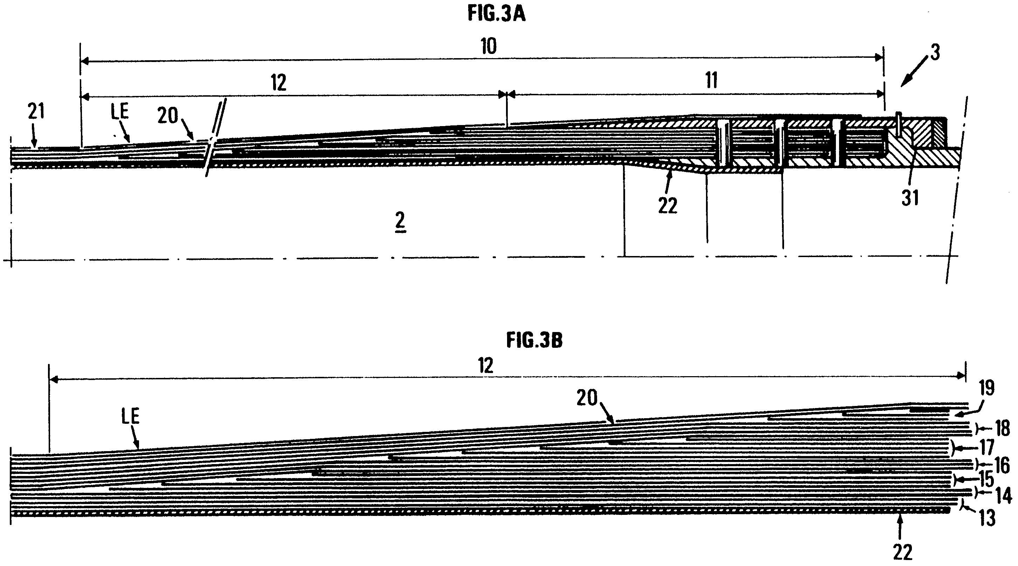

La figure 3A illustre une façon de réaliser une ligne selon la présente invention, la figure 3B étant une vue de détail représentant la manière dont l'élément de raideur variable Ev est intégré en cours de fabrication de la ligne 2.

Sur la présente figure 3A, l'extrémité de la ligne 2 est assemblée à une pièce tubulaire métallique ou embout de raccordement 31 selon le procédé d'assemblage décrit dans la demande de brevet FR-2.675.563, publiée le 23.10.92.

Dans l'exemple représenté sur la figure 3A, la partie 10 de la ligne 2 assurant la connexion avec le sol, a une section sensiblement constante sur une longueur 11 de 0,40 m suivie d'une partie 12 dont la variation d'épaisseur suit la diminution de longueur des sous-couches de carbone drapées constituant l'élément de raideur variable dont le détail est donné sur la figure 3B sur une longueur de 3 m par exemple.

La référence 21 indique le début de la longueur courante de la ligne (c'est-à-dire en dehors de la zone à raideur variable).

L'ensemble est entouré par une couche de verre fretté 20.

La référence 22 désigne la chemine d'étanchéité interne ou liner interne.

Cette chemise d'étanchéité peut être du type de celle décrite dans le brevet FR-2.458.022.

Les liners internes peuvent être constitués de matériaux bien connus par un homme du métier. Ainsi, on peut utiliser des élastomères tels que du BUNA, HNBR (Hydrogenated Nitrile Buna Rubber) ou tout autre matériau assurant à la ligne une certaine étanchéité.

On peut aussi utiliser des polyamides tels que du Rilsan.

L'ensemble est recouvert par un chemisage externe ou liner externe LE qui assure l'étanchéité de la structure et une protection contre les chocs.

La longueur de la ligne 10 (décrite en détail Fig. 3B) sur laquelle varie la raideur du tube est constituée de trois éléments de raideur variable Ev introduits de la façon suivante :

- une couche de fibres de verre 13 constituée de huit sous-couches 13a...13h superposées constituant chacune en une paire d'enroulement hélicoïdaux entrecroisés de fibres avec le même pas d'enroulement par exemple, mais en sens contraire l'une de l'autre, l'angle que fait la direction propre de la fibre avec l'axe de la ligne 2 a une valeur alpha, les sous-couches sont noyées dans un matériau d'enrobage qui peut être par exemple une résine époxy,

- une couche de carbone 14 constituée de trois sous-couches 14a, 14b, 14c superposées, déposées de la même façon que les sous-couches de fibres de verre avec un angle béta. Les couches de verre 13 et de carbone 14 recouvrent la longueur totale de la ligne 2, les sous-couches sont noyées dans un matériau d'enrobage qui peut être par exemple une résine époxy,

- un élément à raideur variable 15 constitué de six sous-couches drapées de carbone 15a, ...15f, dont la longueur diminue de façon progressive longitudinalement lorsque la position de la sous-couche s'éloigne de l'axe de la ligne 2,

- puis une couche de fibres de verre 16 identique à la couche 13, un élément à raideur variable Ev 17 identique à 15, une couche de carbone 18 identique à la couche 14,...

L'ensemble est fretté par une couche de fibres de verre circonférentielle 20.

L'angle alpha est de préférence compris entre 50 et 75°.

L'angle béta varie, de préférence, entre 10 et 25°.

On obtient une ligne dont la raideur varie de 4,7 MNm$^2$, à 11,5 MNm$^2$ sur une longueur de 3 mètres par exemple en disposant 5 éléments à raideur variable constitués chacun de six sous-couches de carbone drapées.

Une des possibilités de répartition des différentes couches et des éléments à raideur variable est donnée dans le tableau 1 dans lequel les valeurs des épaisseurs correspondent à des données théoriques.

La longueur sur laquelle on dégrade l'élément à raideur variable est par exemple égale à 0,30 mètres.

TABLEAU 1

| Nature de la couche | Technique de dépôt | Nombre de sous-couches | Epaisseur de chaque sous-couches | Epaisseur totale de la couche |
|---|---|---|---|---|
| couche extérieure fibres de verre | frettée | | | |
| fibres de verre | bobiné $\alpha \simeq 60°$ | 7 | 2,7 mm | 15,4 mm |
| carbone | drapée 0/90° | 6 | 2,2 mm | 13,2 mm |
| carbone | bobinée $\beta \simeq 19°$ | 3 | 1,68 mm | 5,04 mm |
| carbone | drapée 0/90° | 6 | 2,2 mm | 13,2 mm |
| fibres de verre | bobinée $\alpha \simeq 60°$ | 8 | 3,2 mm | 25,6 mm |
| carbone | drapée 0/90° | 6 | 2,2 mm | 13,2 mm |
| carbone | bobinée $\beta \simeq 19°$ | 3 | 1,81 mm | 5,43 mm |
| carbone | drapée 0/90° | 6 | 2,2 mm | 13,2 mm |
| fibres de verre | bobinée $\alpha \simeq 60°$ | 8 | 3,2 mm | 25,6 mm |
| carbone | drapée 0/90° | 6 | 2,2 mm | 13,6 mm |
| carbone | bobiné | 3 | 1,68 mm | 5,04 mm |
| fibres de verre | bobiné $\alpha \simeq 60°$ | 8 | 3,2 mm | 25,6 mm |

La cohésion ou assemblage entre les éléments de raideur variable introduits et les couches constituant la partie courante de la ligne est, par exemple, assurée par la matrice qui adhère aux fibres et forme sensiblement un milieu continu au moment de la réticulation.

On ne sortira pas du cadre de la présente invention si l'on dispose plusieurs éléments de raideur variable sur la ligne en cours de fabrication en les répartissant sur la longueur de la ligne.

Le nombre d'éléments intégrés en cours de fabrication localement sur la ligne, est fonction de la valeur de la raideur variable que l'on veut apporter à la ligne.

Cet exemple est nullement limitatif, les paramètres nombre d'éléments à raideur variable, nombre de sous-couches constituant un élément à raideur variable, répartition de ceux-ci dans la fabrication de la ligne, longueur sur laquelle on dégrade l'élement à raideur variable pouvant changer.

La raideur totale apportée à la ligne est fonction du nombre de couches bobinées et du nombre d'éléments.

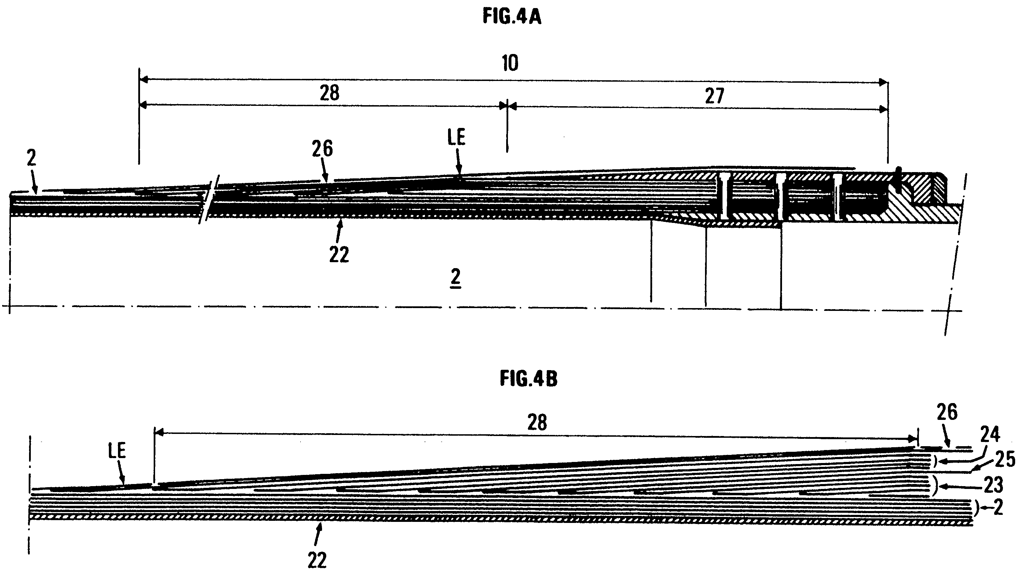

La figure 4A représente un mode de réalisation de la ligne 2 selon le procédé précédemment décrit dans lequel on rapporte deux éléments à raideur variable Ev autour d'une ligne 2 afin de doter la ligne d'une raideur variant sur une partie de sa longueur.

Sur la figure 4B, on a représenté la manière dont les deux éléments Ev sont rapportés et liés à la ligne 2.

Les deux éléments de raideur variable 23 et 24 sont déposés autour de la ligne 2.

On dépose le premier élément 23 sur la ligne 2, la liaison entre les deux étant assurée, par exemple par un film de colle, puis on le recouvre par une couche de fibres de verre 25 bobinée identique aux couches constituant habituellement la partie courante de la ligne 2.

On dépose ensuite le deuxième élément 24 autour de la couche de fibres de verre 25.

L'ensemble est fretté par une couche de fibres de verre circonférentielle 26 qui se prolonge, par exemple sur une longueur de 0,20 m, au-delà de la longueur de l'ensemble constitué par les éléments Ev et les couches de fibres de verre, rapportés autour de la ligne 2.

On peut déposer autour et sur toute la longueur de la ligne un liner ou chemise d'étanchéité externe LE.

Sur le présent exemple, la ligne 2 a une section constante sur une longueur 27 de 0,40 m et une section variant en fonction du nombre d'éléments Ev rapportés sur une longueur 28, par exemple de 3 m. La variation de raideur de la ligne se fait sur la partie 28.

Le nombre d'élément que l'on rapporte autour de la ligne est fonction de la valeur de raideur variable dont on veut doter la ligne, la raideur donnée à la ligne étant fonction du nombre d'éléments et du nombre de couches de carbone et de couches de verre.

On ne sortira pas de la présente invention si l'on répartit les éléments en plusieurs endroits de la ligne.

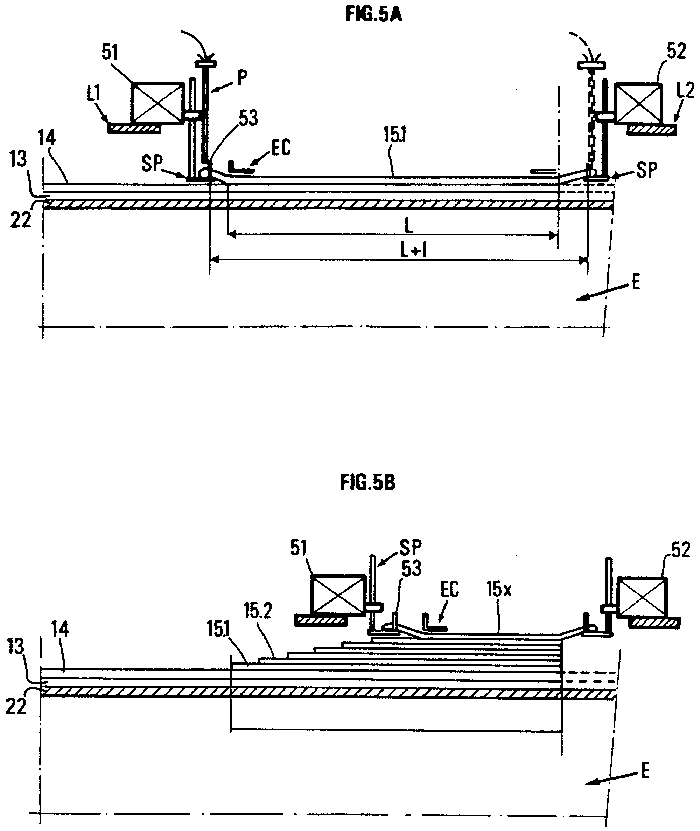

Une autre façon de procéder, consiste à utiliser pour l'élément de raideur variable des sous-couches de carbone bobinées à la place de sous-couches de carbone drapées. Une telle technologie va être décrite en se référant aux figures 3A, 3B, 5A et 5B.

On peut procéder de la façon suivante :

1) On enroule autour de la chemise d'étanchéité interne ou liner interne 22 une première couche de matériau composite 13, par exemple des fibres de verre, constituée de n sous-couches superposées consistant chacune en une paire d'enroulement hélicoïdaux entrecroisées de fibres avec le même pas d'enroulement, par exemple, mais en sens contraire l'une de l'autre, l'angle que fait la direction propre de la fibre avec l'axe de la ligne 2 a une valeur alpha, les sous-couches étant noyées dans un matériau d'enrobage qui peut être, par exemple, une résine époxy.

2) On enroule autour de la première couche et de la même façon une couche de carbone constituée d'un nombre m de sous-couches superposées déposées de la même façon que la couche de fibres de verre avec un angle béta. Les couches de verre 13 et de carbone 14 recouvrent la longueur total de la ligne 2, les sous-couches sont dans les deux cas noyées dans un matériau d'enrobage qui peut être, par exemple, une résine époxy, les valeurs n et m peuvent être égales.

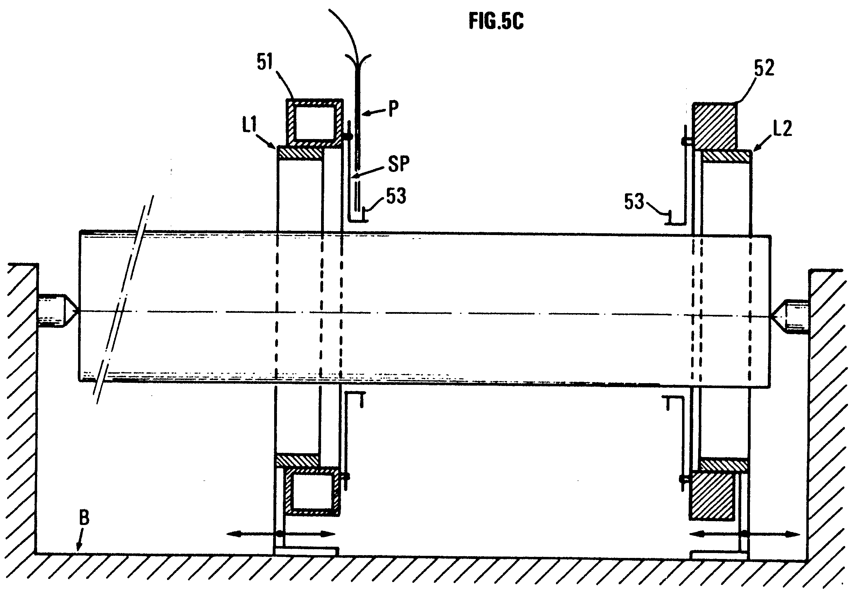

3) On positionne deux bagues ou anneaux 51, 52 (Fig. 5A) portant des picots sur leur périphérie à chacune des extrémités d'une longueur égale à la longueur L sur laquelle on veut obtenir une variation de raideur +1 qui correspond à une partie des fibres non utilisables qui sera éliminée par la suite. Une des deux bagues est positionnée à une des extrémités de la ligne 2, par exemple, la plus proche de l'embase située à droite sur la figure, et reste fixe au cours de l'opération de bobinage décrite ci-après. Les deux bagues peuvent être supportées par un dispositif tel que celui décrit dans la figure 5C. Les bagues 51 et 52 sont solidaires respectivement des lunettes L1 et L2, elles-mêmes solidaires d'un bâti B sur lesquelles les lunettes peuvent coulisser longitudinalement, et qui permet un positionnement précis des lunettes, donc des bagues. Le dépôt de la première sous-couche peut s'effectuer par exemple de la façon suivante : après avoir positionné les deux bagues 51 et 52, on règle la hauteur du support de picots SP de façon à ce qu'il soit en contact avec la dernière couche déposée sur le tube. On dépose en continu les fibres ou nappes de fibres 151, en carbone, en déplaçant la passette P dans laquelle passe la fibre, entre les deux anneaux, puis en faisant contourner les picots 53 à la passette, de façon à ce que la fibre fasse un retour autour des picots 53 portés par les anneaux 51, 52. La passette P effectue un mouvement de va-et-vient entre les deux anneaux (sur les figures, la position de la passette est représentée en traits pleins et en traits pointillés). Pour celà, elle est montée sur un chariot et son déplacement est commandé par un dispositif non représentés sur les figures 5A, 5B et 5C. Une fibre longitudinale ou une nappe de fibres longitudinales vient ainsi contourner un picot 53 puis, selon une trajectoire circonférentielle, va atteindre un autre picot 53 voisin pour le contourner lui-même et faire retour longitudinalement au-dessus de la longueur du tube constituant l'élément de raideur variable. Le support de picot SP pouvant introduire une certaine épaisseur aux deux extrémités de l'élément ainsi constitué, l'enroulement circonférentiel EC décrit par la suite, permettant de maintenir les fibres en place, a aussi pour but de plaquer les fibres ainsi déposées sur la couche précédemment déposée.

On notera que les fibres peuvent ainsi contourner un seul picot ou deux picots immédiatement voisins ou encore deux picots non immédiatement voisins.

Dans ce dernier cas, les fibres ont une trajectoire circonférentielle au-dessus de la bague entre les deux picots qu'elles contournent. Ainsi, les fils sont-ils stabilisés lors de l'inversion du sens de dépose des fibres longitudinales. A la suite de celà, comme indiqué précédemment, un enroulement circonférentiel EC vient ligaturer ou maintenir lesdites couches longitudinales constituant la première sous-couche de l'élément de raideur variable. L'enroulement est réalisé à chaque extrémité de la longueur sur laquelle on a bobiné les fibres sur la partie des fibres proche des bagues et située entre les deux bagues. On supprime alors les protubérances P dues aux retours sur les picots 53 en utilisant, par exemple, une découpe au laser qui permet d'éliminer de façon précise la protubérance. On peut éventuellement laisser la protubérance située sur la bague qui reste fixe et la supprimer en fin de fabrication du tube.

Puis on décale au moins une des deux bagues de préférence celle qui est positionnée à l'extrémité opposée de l'extrémité de la ligne venant s'emboîter dans un embout ou vers l'embase, d'un pas dont la valeur est égale au décalage que l'on veut introduire entre les différentes sous-couches constituant l'élément variable.

Le pas pourra avoir une valeur variable ou constante. On recommence alors l'opération de bobinage de façon à constituer la seconde sous-couche 152 de l'élément à raideur variable sur laquelle la bague 53 a été déplacée après avoir réglé la hauteur du support de pivot SP.

On répète les opérations de bobinage, ligature, suppression des protubérances et décalage des anneaux autant de fois que l'on veut pour obtenir le nombre de sous-couches conférant à l'élément de raideur variable la raideur désirée. En fin d'opération de fabrication de l'élément variable, on a un nombre x de sous-couches et une position de bague telle que celle représentée sur la figure 5B.

On peut éventuellement remplacer l'opération de ligature permettant de maintenir les fibres en place par une opération de frettage.

On dépose ensuite (Fig. 3B), par exemple, une couche de fibres de verre 16 identique à la couche 13, puis on bobine de nouveau des fibres de façon à constituer un élément de raideur variable de longueur de préférence inférieure à la longueur du premier élément intégré en cours de fabrication de la ligne, puis une couche de carbone 18 identique à la couche 14, ... ceci jusqu'à obtenir la structure du tube spécifiée.

L'ensemble est ensuite fretté par une couche de fibres de verre circonférentielle 20.

On entoure le tout par un chemisage ou liner externe LE dont le rôle est d'assurer l'étanchéité de l'ensemble à l'eau de mer et ainsi de prévenir tout risque de détérioration du chemisage interne 22 dans le cas d'une perte de pression dans l'anneau interne.

On peut envisager de bobiner les fibres ou nappes de fibres constituant une sous-couche de l'élément à raideur variable à l'aide d'aiguilles ou de crochets répartis sur la périphérie de deux bagues placées à chaque extrémité d'une longueur correspondant à une sous-couche de l'élément à raideur variable.

L'angle alpha est de préférence compris entre 50° et 75°.

L'angle béta varie de préférence entre 10 et 25°. Le choix de ces valeurs d'angle alpha et béta permet d'assurer la stabilité de la ligne en pression et en traction.

L'angle de bobinage choisi pour les sous-couches bobinées constituant l'élément à raideur variable est compris, par exemple entre 0 et 20°, et de préférence entre 0 et 3°.

Les données incluses dans le tableau 1 sont applicables à la nouvelle façon de procéder utilisant pour l'élément de raideur variable des sous-couches de carbone bobinées. Il faut alors remplacer dans le tableau toutes les données concernant la technique drapée avec un angle 0/90° par une technique bobinée avec un angle compris entre 0 et 20°, et de préférence entre 0 et 3°.

Une autre façon de procéder est de réaliser l'élément de raideur variable en dehors du processus de fabrication de la ligne autour d'un mandrin, par exemple, puis de rapporter un ou plusieurs de ces éléments autour d'une ligne 2 afin de doter la ligne d'une raideur variant sur au moins une partie de sa longueur.

On utilise une technique de dépose et intégration de l'élément à raideur variable autour de la ligne identique à celle décrite en rapport à l'exemple des figures 4A, 4B. La seule différence provient du fait que l'élément à raideur variable est dans ce cas constitué par des sous-couches de carbone bobinées.

L'exemple donné en illustration pour les figures 4A et 4B est applicable pour le report des éléments de couches bobinées.

Le nombre d'éléments que l'on rapporte autour de la ligne est fonction de la valeur de la raideur variable que l'on veut donner à la ligne.

La valeur de la raideur de la ligne est fonction du nombre d'éléments rapportés et du nombre de couches de carbone et de couches de verre.

On ne sortira pas de la présente invention si l'on répartit les éléments en plusieurs endroits de la ligne.

De la même façon, on peut envisager de déplacer les deux bagues de façon à avoir une variation de longueur des éléments à raideur variable à chacune de leurs extrémités.

Sur la figure 6, on a montré une façon dont la connexion de la ligne 2 à raideur variable se fait avec le fond.

Dans le mode de mise en oeuvre représenté sur cette figure, la ligne 2 possède une partie de raideur variable 30.

L'extrémité de la ligne 2 reçoit une pièce tubulaire métallique ou embout de raccordement 31 décrit dans la demande de brevet FR-A-2 675 563.

Dans l'exemple représenté sur la figure 6, l'extrémité de la ligne 2 a une section constante sur une partie de sa longueur de façon à l'assembler à l'embout de raccordement 31 (voir détail Fig. 3A).

Cet exemple est nullement limitatif, on peut envisager toute autre forme pour l'embout et adapter la forme de l'extrémité de la ligne 2 en conséquence.

L'embout comprend entre autre deux inserts à l'intérieur desquels la ligne est insérée et non représentée sur la figure.

Les inserts sont munis de perçage radiaux qui reçoivent des pions 32 traversant radialement la paroi de la ligne 2 dont les extrémités occupent lesdits perçages en regard.

La connexion de la ligne 2 à l'installation de fond se fait par un connecteur 33 qui assure la continuité avec l'installation de fond. Les efforts de traction sont transmis directement par la ligne 2 à l'embase 34 par l'intermédiaire du connecteur 33.

## Revendications

1. Procédé de réalisation d'une ligne dont la raideur varie sur au moins une partie de sa longueur, ladite ligne comportant au moins un élément de raideur variable, ledit élément étant constitué de sous-couches de matériau composite comprenant des fibres, sous-couches dans lesquelles les directions de fibres ont au moins une composante faisant un angle nul ou un angle de faible valeur avec l'axe de la ligne, comportant les étapes suivantes :

a) on enroule sur un tube initial et sur une longueur correspondant à la longueur finale de la ligne une première couche de matériau composite comprenant des fibres de façon hélicoïdale avec un angle égal en valeur absolue à alpha par rapport à l'axe du tube initial,

b) on enroule sur la première couche et sensiblement sur la même longueur une seconde couche de matériau composite comprenant des fibres de façon hélicoïdale avec un angle en valeur absolue égal à bêta par rapport à l'axe du tube,

c) on dépose sur la seconde couche des fibres sous forme d'une ou plusieurs sous-couches drapées ou on bobine de façon continue des fibres essentiellement longitudinales, de façon à constituer des sous-couches en matériau composite ayant des dimensions longitudinales allant en diminuant avec l'éloignement de la sous-couche par rapport à l'axe du tube initial et constituant ainsi un élément à raideur variable,

d) on enroule sur l'élément à raideur variable et sensiblement sur la longueur de la ligne une ou plusieurs couches du type de la première ou de la seconde couche,

e) on soumet l'ensemble à une étape de réticulation.

2. Procédé selon la revendication 1, caractérisé en ce que les sous-couches ont des dimensions longitudinales allant en diminuant avec l'éloignement de la sous-couche par rapport à l'axe du tube.

3. Procédé selon l'une des revendications 1 ou 2, caractérisé en ce que le tube initial est une chemise interne assurant l'étanchéité du tube.

4. Procédé selon l'une des revendications 1 ou 2, caractérisé en ce qu'après l'étape e), on dépose un liner ou chemisage externe.

5. Procédé selon la revendication 1, caractérisé en ce que l'étape c), au cours de laquelle on bobine des fibres, comporte les étapes suivantes :

g) on positionne une bague, ladite bague portant des picots répartis sur sa périphérie, à chaque extrémité d'une longueur définissant une sous-couche constituant l'élément de raideur variable,

h) on bobine les fibres ou nappes de fibres constituant une sous-couche en faisant retour sur les picots,

i) on ligature par un enroulement circonférentiel chaque extrémité des fibres ou nappes de fibres de façon telle que les protubérances dues aux retours sur les picots se trouvent à l'extérieur de la partie d'épaisseur constante de la sous-couche comprise entre les deux bagues,

j) on supprime les protubérances dues au retour sur les picots,

k) on déplace au moins une des deux bagues d'un pas égal au décalage que l'on veut introduire entre les sous-couches constituant l'élément à raideur variable,

1) on réitère les étapes g) à k) jusqu'à ce que l'on obtienne un nombre de sous-couches correspondant à la raideur variable que l'on souhaite obtenir pour l'élément à raideur variable.

6. Procédé selon l'une des revendications 1 ou 5, caractérisé en ce que l'on bobine les fibres ou nappes de fibres constituant une sous-couche à l'aide d'aiguilles ou de crochets répartis sur la périphérie de deux bagues placées à chaque extrémité d'une longueur à une sous-couche constituant l'élément à raideur variable.

7. Procédé selon l'une des revendications 1 ou 5, caractérisé en ce qu'une fibre ou nappe de fibres longitudinales fait retour autour de deux picots ayant une trajectoire circonférentielle entre les deux picots qu'elle contourne.

8. Procédé selon la revendication 1, caractérisé en ce que l'on choisit les angles alpha et bêta de façon à assurer la stabilité de la ligne en pression et en traction.

9. Procédé selon la revendication 1, caractérisé en ce que les sous-couches drapées en matériau composite sont des fibres de carbone.

10. Procédé selon la revendication 1, caractérisé en ce que les sous-couches bobinées en matériau composite sont des fibres de carbone.

11. Procédé selon la revendication 1, caractérisé en ce que l'on répète les opérations c) et d) autant de fois qu'il est nécessaire pour obtenir une valeur de raideur variable de la ligne spécifiée.

12. Procédé selon la revendication 1, caractérisé en ce que l'on diminue les dimensions longitudinales des sous-couches de l'étape c) de façon constante.

13. Procédé selon la revendication 1, caractérisé en ce que l'on diminue les dimensions longitudinales des sous-couches de l'étape c) de façon variable.

14. Procédé selon la revendication 1, caractérisé en ce que l'on utilise au moins deux matériaux composites pour réaliser les couches du type première ou seconde sous-couche.

15. Procédé selon les revendications 1 ou 2, caractérisé en ce que l'on décale lesdites sous-couches entre les différentes sous-couches de matériau composite de renfort de manière constante.

16. Procédé selon l'une des revendications 1 ou 2, caractérisé en ce que le décalage axial entre les différentes sous-couches de matériau composite de renfort est à pas variable.

17. Ligne obtenue selon l'une des revendications 1 à 16, caractérisée en ce que la ligne est une colonne montante ou un pied de colonne montante.

18. Ligne obtenue selon l'une des revendications 1 à 16, caractérisée en ce que ladite ligne est connectée à un point fixe situé au fond de l'eau, l'autre extrémité de cette ligne étant fixée à une plate-forme flottante de surface telle une plate-forme marine.

19. Ligne obtenue selon la revendication 1, caractérisée en ce que son extrémité a une forme adaptée à la forme interne d'une pièce métallique assemblée à ladite ligne.

## Patentansprüche

1. Verfahren zur Herstellung einer Leitung, deren Steifigkeit über wenigstens einen Teil ihrer Länge variiert, wobei die Leitung wenigstens ein Element von variabler Steifigkeit umfaßt, wobei das Element aus Zwischenschichten aus Fasern umfassendem Verbundmaterial gebildet ist, wobei die Faserrichtungen in den Zwischenschichten wenigstens eine Komponente aufweisen, die mit der Achse der Leitung einen Winkel Null oder einen Winkel von kleinem Wert ausmachen, umfassend die folgenden Schritte:

   a) man wickelt auf ein Ausgangsrohr und über eine Länge, die der Endlänge der Leitung entspricht, eine erste Schicht aus Fasern umfassendem Verbundmaterial in spiralförmiger Weise mit einem im Absolutwert gleichen Winkel $\alpha$ in bezug auf die Achse des Ausgangsrohres,

   b) man wickelt auf die erste Schicht und im wesentlichen über die gleiche Länge eine zweite Schicht aus Fasern umfassendem Verbundmaterial in spiralförmiger Weise mit einem im Absolutwert gleichen Winkel $\beta$ in bezug auf die Achse des Rohres,

   c) man trägt auf die zweite Schicht Fasern in Form einer oder mehrerer Drappierungszwischenschichten auf oder man spult kontinuierlich im wesentlichen longitudinale Fasern auf, derart, um Zwischenschichten aus Verbundmaterial zu bilden, die Längsabmessungen aufweisen, welche sich mit dem Abstand der Zwischenschicht in bezug auf die Achse des Anfangs rohres vermindernd erstrecken und so ein Element mit variabler Steifigkeit bilden,

   d) man wickelt auf das Element mit variabler Steifigkeit und im wesentlichen über die Länge der Leitung eine oder mehrere Schichten des Typs der ersten oder der zweiten Schicht,

e) man unterzieht die Einheit einem Vernetzungsschritt.

**2.** Verfahren nach Anspruch 1, dadurch gekennzeichnet, daß die Zwischenschichten Längsabmessungen aufweisen, die sich mit dem Abstand der Zwischenschicht in bezug auf die Achse des Rohres vermindernd erstrecken.

**3.** Verfahren nach einem der Ansprüche 1 oder 2, dadurch gekennzeichnet, daß das Anfangsrohr ein Innenmantel ist, der die Dichtigkeit des Rohres sicherstellt.

**4.** Verfahren nach einem der Ansprüche 1 oder 2, dadurch gekennzeichnet, daß man nach dem Schritt e) einen Liner oder Außenmantel aufträgt.

**5.** Verfahren nach Anspruch 1, dadurch gekennzeichnet, daß man während des Schrittes c) die Fasern aufspult, umfassend die folgenden Schritte:

g) man positioniert einen Ring, wobei der Ring über seinen Umfang verteilte Keile trägt, an jedem Ende einer Länge, die eine Zwischenschicht definiert, welche das Element von variabler Steifigkeit bildet,

h) man spult die Fasern oder Faservliese, die eine Zwischenschicht unter Ausführen einer Umkehr über die Keile bilden, auf,

i) man bindet durch eine Umfangswicklung jedes Ende von Fasern oder Faservliesen ab, derart, daß sich die Protuberanzen infolge der Umkehrungen über die Keile außen von dem Teil konstanter Dicke der Zwischenschicht einschließlich zwischen den zwei Ringen befinden,

j) man unterdrückt die Protuberanzen infolge der Umkehr über die Keile,

k) man verschiebt wenigstens einen der zwei Ringe um einen Schritt gleich einer Verschiebung, die man zwischen den Zwischenschichten, welche das Element mit variabler Steifigkeit bilden, einführen will,

1) man wiederholt die Schritte g) bis k), bis man eine Anzahl von Zwischenschichten erhält, die der variablen Steifigkeit entsprechen, welche man für das Element mit variabler Steifigkeit zu erhalten wünscht.

**6.** Verfahren nach einem der Ansprüche 1 oder 5, dadurch gekennzeichnet, daß man die Fasern oder Faservliese, die eine Zwischenschicht bilden, mittels Nadeln oder Haken, die über den Umfang der zwei Ringe verteilt sind, welche an jedem Ende einer Länge angeordnet sind, auf eine Zwischenschicht, die das Element mit variabler Steifigkeit bildet, aufspult.

**7.** Verfahren nach einem der Ansprüche 1 oder 5, dadurch gekennzeichnet, daß eine Faser oder longitudinale Faservliese eine Umkehr um zwei Keile ausführt, die eine Umfangstrajektorie zwischen den zwei Keilen, welche sie umfährt, aufweisen.

**8.** Verfahren nach Anspruch 1, dadurch gekennzeichnet, daß man die Winkel $\alpha$ und $\beta$ derart wählt, um die Druck- und Zugfestigkeit der Leitung sicherzustellen.

**9.** Verfahren nach Anspruch 1, dadurch gekennzeichnet, daß die mit Verbundmaterial drappierten Zwischenschichten Kohlenstoff-Fasern sind.

**10.** Verfahren nach Anspruch 1, dadurch gekennzeichnet, daß die mit Verbundmaterial aufgespulten Zwischenschichten Kohlenstofffasern sind.

**11.** Verfahren nach Anspruch 1, dadurch gekennzeichnet, daß man die Vorgänge c) und d) so viele Male wiederholt, wie es notwendig ist, um einen Wert von variabler Steifigkeit der spezifischen Leitung zu erhalten.

**12.** Verfahren nach Anspruch 1, dadurch gekennzeichnet, daß man die Längsabmessungen der Zwischenschichten des Schrittes c) konstant vermindert.

**13.** Verfahren nach Anspruch 1, dadurch gekennzeichnet, daß man die Längsabmessungen der Zwischenschichten des Schrittes c) variabel vermindert.

**14.** Verfahren nach Anspruch 1, dadurch gekennzeichnet, daß man wenigstens zwei Verbundmaterialien verwendet, um die Zwischenschichten des ersten oder zweiten Zwischenschichttyps zu verwirklichen.

**15.** Verfahren nach einem der Ansprüche 1 oder 2, dadurch gekennzeichnet, daß man die Zwischenschichten zwischen den verschiedenen Zwischenschichten aus verstärktem Verbundmaterial konstant verschiebt.

**16.** Verfahren nach einem der Ansprüche 1 oder 2, dadurch gekennzeichnet, daß die axiale Verschiebung zwischen den verschiedenen Zwischenschichten aus verstärktem Verbundmaterial variabel erfolgt.

**17.** Leitung, die nach einem der Ansprüche 1 bis 16 erhalten ist, dadurch gekennzeichnet, daß die Leitung ein Steigrohr oder ein Steigrohrstativ ist.

**18.** Leitung, die nach einem der Ansprüche 1 bis 16 erhalten ist, dadurch gekennzeichnet, daß die Leitung mit einem festen, am Boden von Wasser gelegenen Punkt verbunden ist, wobei das andere Ende dieser Leitung mit einer Oberflächenschwimmplattform, wie einer Offshore-Plattform, befestigt ist.

**19.** Leitung, die nach Anspruch 1 erhalten ist, dadurch gekennzeichnet, daß ihr Ende eine Form aufweist, die an die innere Form eines Metallteiles angepaßt ist, welches an die Leitung angeschlossen ist.

**Claims**

**1.** Method of manufacturing a line whose stiffness varies over at least a portion of its length, the said line having at least one element with variable stiffness, the said element being made up of sub-layers of composite material containing fibres, these being sub-layers in which the fibres include at least one component whose direction forms an angle of zero or small value with the axis of the line, comprising the following steps:

a) a first layer of composite material containing fibres is wound helically onto an initial pipe and over a length corresponding to the final length of the line at an angle equal in absolute value to alpha relative to the axis of an initial pipe;

b) a second layer of composite material containing fibres is wound helically onto the first layer and substantially over the same length at an angle equal in absolute value to beta relative to the axis of the pipe;

c) fibres are applied on top of the second layer in the form of one or several draped sub-layers or fibres are wound continuously and substantially longitudinally so as to form sub-layers of composite material of decreasing longitudinal size the further away the sub-layer is in distance from the axis of the initial pipe, thereby forming an element with variable stiffness,

d) one or several layers of the same type as the first or second layer are wound onto the element with variable stiffness element and substantially along the length of the line,

e) the unit is then put through a process of cross-linking.

**2.** Method as claimed in claim 1, characterised in that the sub-layers are of longitudinal dimensions that decrease the further away the sub-layer is from the axis of the pipe.

**3.** Method as claimed in one of claims 1 or 2, characterised in that the initial pipe is an internal sleeve that will provide the pipe with sealing.

**4.** Method as claimed in one of claims 1 or 2, characterised in that after step d), a liner or external jacket is applied.

**5.** Method as claimed in claim 1, characterised in that step c), during which fibres are wound, comprises the following steps:

g) a ring which bears spikes distributed around its periphery is positioned at each end of a length defining a sub-layer forming the element with variable stiffness,

h) fibres or sheets of fibres are wound to form a sub-layer by being wound behind the spikes,

i) a circumferential winding is used to bind each end of the fibres or layers of fibres so that the projections caused by the windings behind the spikes are on the exterior of the portion of constant thickness of the sub-layer between these two rings,

j) the projections caused by the windings behind the spikes are removed,

k) at least one of the two rings is displaced by a pitch equal to the desired offset to be left between the sub-layers forming the element with variable stiffness,

1) steps g) to k) are repeated until a number of sub-layers corresponding to the variable stiffness desired is reached to produce the element with variable stiffness.

6. Method as claimed in one of claims 1 to 5, characterised in that the fibres or sheets of fibres are wound to form a sub-layer with the aid of needles or hooks distributed over the periphery of two rings positioned at each end of a length corresponding to a sub-layer forming the element with variable stiffness.

7. Method as claimed in one of claims 1 or 5, characterised in that a fibre or sheet of longitudinal fibres is wound behind two spikes along a circumferential path between the two spikes behind which they are wound.

8. Method as claimed in claim 1, characterised in that the angles alpha and beta are selected so as to ensure the stability of the line under pressure and tractive forces.

9. Method as claimed in claim 1, characterised in that the draped sub-layers of composite material are carbon fibres.

10. Method as claimed in claim 1, characterised in that the wound sub-layers of composite material are carbon fibres.

11. Method as claimed in claim 1, characterised in that operations c) and d) are repeated as many times as necessary to obtain a specified value of stiffness in the line.

12. Method as claimed in claim 1, characterised in that the longitudinal dimensions of the sub-layers of step c) are decreased on a constant basis.

13. Method as claimed in claim 1, characterised in that the longitudinal dimensions of the sub-layers of step c) are decreased on a variable basis.

14. Method as claimed in claim 1, characterised in that at least two composite materials are used to make the layers of the first or second type of sub-layer.

15. Method as claimed in claims 1 or 2, characterised in that the said sub-layers are offset between the different sub-layers of composite reinforcing material in a constant manner.

16. Method as claimed in one of claims 1 or 2, characterised in that the axial offset between the different sub-layers of composite reinforcing material is of variable pitch.

17. Line produced as claimed in one of claims 1 to 16, characterised in that the line is a riser string or a riser string base.

18. Line produced as claimed in one of claims 1 to 16, characterised in that the said line is connected to a fixed point located on the water bed, the other end of this line being fixed to a floating platform at the surface such as an offshore platform.

19. Line produced as claimed in claim 1, characterised in that its end has a shape that is designed to match the internal shape of a metal part for assembling the line.

**FIG.1**

**FIG.2**

**FIG.7**

**FIG.6**

FIG.3A

FIG.3B

EP 0 546 138 B1

**FIG.4A**

**FIG.4B**

EP 0 546 138 B1

## FIG.5A

## FIG.5B

FIG.5C